# EUROPÄISCHE PATENTSCHRIFT

(11) **EP 0 524 929 B1**
(45) Veröffentlichungstag und Bekanntmachung des Hinweises auf die Patenterteilung: **27.04.1994**
(21) Anmeldenummer: 91901737.6
(22) Anmeldetag: 19.12.1990
(51) Int. Cl.: B27H 1/00, B27M 3/00

(54) **VORRICHTUNG ZUM DREHRICHTEN VON BRETTERN**
DEVICE FOR TRUING PLANKS
DISPOSITIF POUR LE DEGAUCHISSAGE DE PLANCHES

(30) Priorität: 20.04.1990 DE 4012645
(43) Veröffentlichungstag der Anmeldung: 03.02.1993
(73) Patentinhaber: Gebrüder Linck, Maschinenfabrik "Gatterlinck" GmbH & Co.KG, D-77704 Oberkirch (DE)
(72) Erfinder: GÖNNER, Siegmar, D-7602 Oberkirch (DE)
(74) Vertreter: Katscher, Helmut, Dipl.-Ing.
(86) Internationale Anmeldenummer: EP9002266
(87) Internationale Veröffentlichungsnummer: WO9116183

(56) Entgegenhaltungen:
- EP-A- 0 211 810
- WO-A-88/05371
- AT-B- 375 866
- FR-B- 640 636

## Beschreibung

Die Erfindung betrifft eine Vorrichtung zum Drehrichten von Brettern und ähnlichen länglichen Holzerzeugnissen mit mehreren, in einem Gestell verstellbar gelagerten Führungskörpern, die gemeinsam einen flachen Brettführungskanal bilden, der sich entlang der Gestellängsachse erstreckt und einen durch Verstellen der Führungskörper veränderbaren Drall um die Gestellängsachse aufweist.

Bretter und ähnliche lamellenartige längliche Holzerzeugnisse können in spanloser Schneidtechnik von den Seiten eines angeflachten Kantholzes oder Holzstammes abgetrennt werden. Diese Bretter oder ähnliche Holzerzeugnisse weisen nicht nur eine Krümmung, sondern auch einen Drall auf, d.h. sie sind um ihre Längsachse gedreht oder gewendelt. Diese Verformung schließt in zahlreichen Anwendungsfällen eine automatisierte Weiterverarbeitung der Bretter aus. Der auftretende Drall ist umso stärker, je schräger die das Brett abtrennenden Schneiden gegenüber der Holzlängsrichtung angestellt sind.

Mit einer bekannten Vorrichtung der eingangs genannten Gattung (DE-A-37 01 127) können die Bretter einem Drehrichtvorgang unterworfen werden, so daß sie ihren herstellungsbedingten Drall verlieren und so für die weitere Verarbeitung geeignet sind.

Bei dieser bekannten Vorrichtung sind in mehreren hintereinandergeschalteten Führungsrahmen als Brettführungskörper jeweils Rollen gelagert. Die Führungsrahmen sind so um eine gemeinsame Achse, beispielsweise die Längsachse des Gestells, geschwenkt, daß sie gemeinsam einen Brettführungskanal bilden, dessen Drall um die Längsachse jeweils so gewählt wird, daß er den vorhandenen Drall der Bretter zurückdreht.

Da der Drall der Bretter je nach den Herstellungsbedingungen, der Holzart und den Eigenschaften des Holzes unterschiedlich ist, sind die Führungsrahmen bei der bekannten Vorrichtung jeweils mit einem gesonderten Schwenkantrieb versehen, der sie in die jeweils erforderliche Schwenkstellung bringt. Die Steuerung dieser einzelnen Schwenkantriebe ist verhältnismäßig aufwendig. Außerdem ist der konstruktive Aufwand bei dieser bekannten Vorrichtung verhältnismäßig hoch.

Bei einer bekannten Vorrichtung (US-A-2 399 348) zum Biegen von lamellierten, zu verleimenden Werkstücken sind mehrere parallelgeführte Biegeanschläge gegen das Werkstück verfahrbar, um es gegen eine Gruppe von feststehenden Biegeanschlägen zu drücken. Das Werkstück erhält hierbei aber keinen Drall, sondern eine Biegung. Außerdem läuft das Werkstück nicht in einen Führungskanal ein, sondern wird zwischen die beiden Gruppen von Biegeanschlägen vor deren Verstellung eingelegt.

Aufgabe der Erfindung ist es daher, eine Vorrichtung der eingangs genannten Gattung so auszubilden, daß sie bei einfachem konstruktivem Aufbau sehr robust ist und in einfacher Weise eine Verstellung des Brettführungskanals ermöglicht.

Diese Aufgabe wird erfindungsgemäß dadurch gelöst, daß die Führungskörper Führungslamellen sind, die sich in Gestellängsrichtung erstrecken und in zwei Lamellenpaketen angeordnet sind, die zwischen sich mit ihren einander zugekehrten Lamellenkanten den Brettführungskanal bilden, und daß die Führungslamellen jedes Lamellenpakets jeweils um eine gemeinsame, sich nahe am Einlauf des Brettführungskanals quer zu den Führungslamellen erstreckende Lamellenschwenkachse jeweils gesondert mittels eines Schwenkantriebs schwenkbar sind.

Die Führungslamellen jedes Lamellenpakets können auf diese Weise fächerartig zueinander verstellt werden, und zwar in der Weise, daß der zwischen den beiden Lamellenpaketen gebildete Brettführungskanal von dem unverändert bleibenden Einlauf ausgehend seinen Drall ändert. Die Veränderung des Dralls wird so vorgenommen, daß die den Brettführungskanal in ihrer Längsrichtung durchlaufenden Bretter entgegen dem Drall, den sie bei ihrer Herstellung erhalten haben, so um ihre Längsachse gedreht werden, daß dieser ursprüngliche Drall der Bretter verloren geht, so daß die Bretter gerade gerichtet sind.

Zur Veränderung des Dralls des Brettführungskanals genügt es, die fächerartige Spreizung der Führungslamellen jedes Lamellenpakets durch unterschiedliches Verschwenken der einzelnen Führungslamellen zu verändern. Es versteht sich, daß diese Schwenkverstellung der einzelnen Führungslamellen so geschieht, daß der zwischen den beiden Lamellenpakete gebildete Brettführungskanal an jeder Stelle angenähert seine Breite beibehält, damit die Bretter den Brettführungskanal passieren können, wobei sie aber ausreichend geführt werden, um den Drehrichtvorgang durchzuführen.

Der konstruktive Aufbau dieser Vorrichtung ist sehr einfach, weil als bewegliche Teile - abgesehen von dem Verstellantrieb für die Schwenkung - nur die Führungslamellen vorgesehen sind. Diese Führungslamellen können als sehr stabile Teile ausgeführt sein, die sich durch ihr flächiges Aneinanderliegen im Lamellenpaket gegenseitig selbst führen und stützen, so daß außer der konstruktiv sehr einfach auszuführenden Schwenklagerung keine sonstige Führung für die Führungslamellen erforderlich ist. Dies ermöglicht einen kompakten Aufbau der Drehrichtvorrichtung, so daß diese kurz hinter der Bearbeitungsstelle angeordnet werden kann, an der die Bretter spanlos hergestellt werden.

Vorzugsweise sind alle Führungslamellen jedes Lamellenpakets mit einem gemeinsamen Schwenkantrieb derart verbunden, daß die einzelnen Führungslamellen in der Weise unterschiedlich schwenkbar sind, daß sie fächerartig spreizbar sind. Dadurch wird der konstruktive Aufwand für den Schwenkantrieb wesentlich vereinfacht. Stattdessen kann auch für jede Führungslamelle ein gesonderter Schwenkantrieb vorgesehen werden.

Eine ganz besonders einfache und robuste Ausführungsform des Schwenkantriebs ist dadurch gekennzeichnet, daß der Schwenkantrieb sich durch Bohrungen quer zu den Führungslamellen der Lamellenpakete erstreckende Verstellstäbe aufweist, die um sich parallel zur Gestellängsachse erstreckende Achsen kippbar sind. Bei einer Kippbewegung dieser Verstellstäbe werden alle Führunglamellen des zugeordneten Lamellenpakets gemeinsam, jedoch um unterschiedliche Schwenkwinkel verschwenkt.

Weitere vorteilhafte Ausgestaltungen des Erfindungsgedankens sind Gegenstand von Unteransprüchen.

Nachfolgend wird ein Ausführungsbeispiel der Erfindung erläutert, das in der Zeichnung dargestellt ist. Es zeigt:
Fig. 1 eine vereinfachte Seitenansicht einer Vorrichtung zum Drehrichten von Brettern,
Fig. 2 eine Stirnansicht der Vorrichtung nach Fig. 1 in Richtung des Pfeiles II,
Fig. 3 eine Stirnansicht der Vorrichtung nach Fig. 1 in Richtung des Pfeiles III,
Fig. 4 in einer Seitenansicht ähnlich der Fig. 1 eine nach oben und unten auseinandergezogene Darstellung der beiden Lamellenpakete, wobei deren fächerartige Spreizung erkennbar ist, und
Fig. 5 eine Stirnansicht ähnlich der Fig. 3, jedoch im geöffneten Zustand.

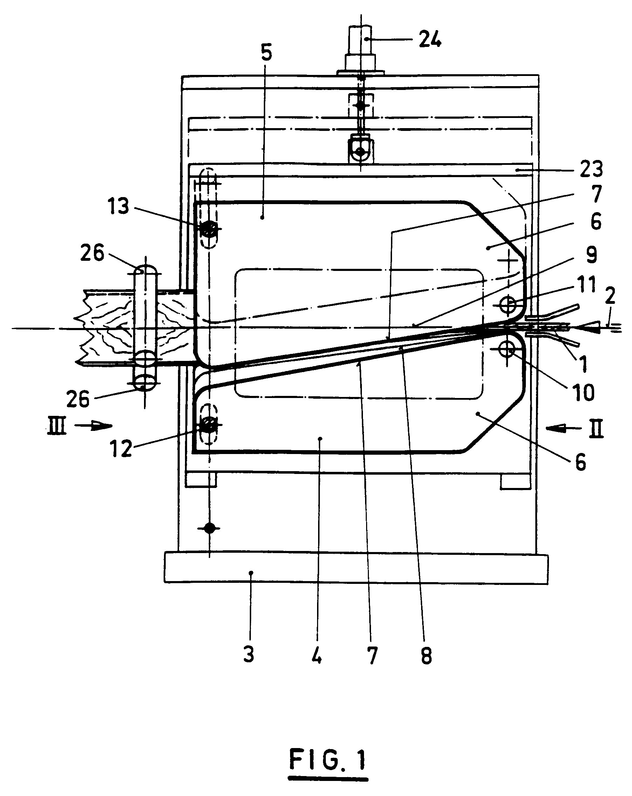

Die in der Zeichnung dargestellte Vorrichtung dient zum Drehrichten von Brettern und ähnlichen länglichen flachen Holzerzeugnissen, die in spanloser Schneidtechnik von den Seiten eines angeflachten Kantholzes oder Holzstammes abgetrennt wurden. Diese Holzerzeugnisse, nachfolgend in vereinfachter Weise zusammenfassend als "Bretter 1" bezeichnet, laufen von der in Fig. 1 rechts befindlichen Einlaufseite in Richtung des Pfeiles 2 ein und verlassen die Vorrichtung am gegenüberliegenden Auslaufende (links in Fig. 1).

Die Vorrichtung weist ein Gestell 3 auf, in dem übereinander ein unteres Lamellenpaket 4 und ein oberes Lamellenpaket 5 angeordnet sind. Jedes Lamellenpaket 4, 5 besteht aus flachen, hochkant stehenden Führungslamellen 6, wobei die Anordnung "hochkant" sich auf die Lage des Brettes 1 am Einlauf bezieht.

Die Führungslamellen 6 erstrecken sich in Gestellängsrichtung und bilden zwischen ihren einander zugekehrten Lamellenkanten 7 einen Brettführungskanal 8, der sich in Gestellängsrichtung erstreckt und einen Drall um die Gestellängsachse 9 aufweist. Dieser Drall des Brettführungskanals 8 ist dem beim Abtrennen der Bretter entstandenen natürlichen Drall der Bretter um ihre Längsachse entgegengesetzt. Die Bretter werden beim Durchlaufen des Brettführungskanals dadurch einem Drehrichtvorgang unterworfen, der sie geraderichtet.

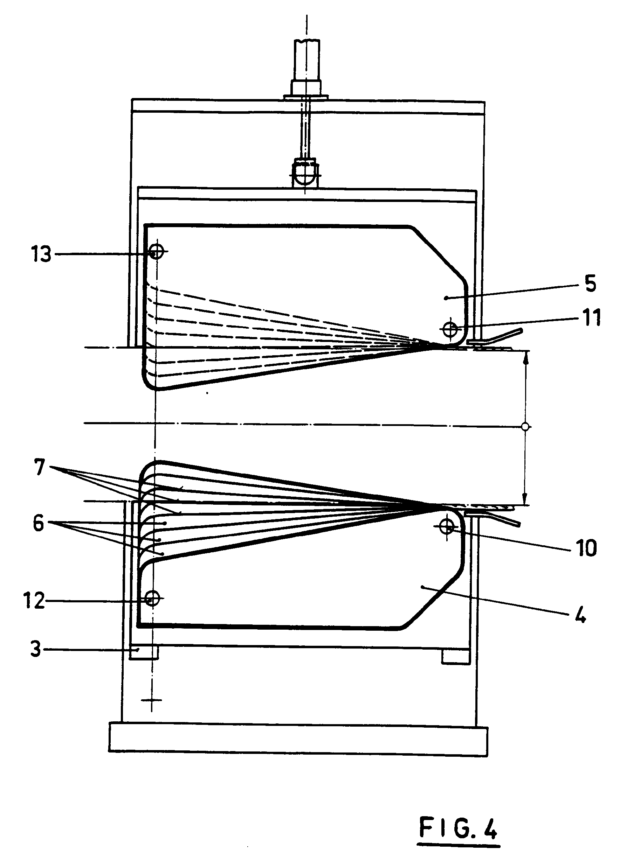

Die einander zugekehrten, den Brettführungskanal 8 begrenzenden Lamellenkanten 7 sind - in Normalebenen zur Gestellachse 9 gesehen - abgerundet, damit keine scharfen Kanten in den Brettführungskanal 8 hineinragen und die Bretter 1 beschädigen könnten. Wie man besonders aus den Fig. 1-3 erkennt, verlaufen bereits in dem dargestellten Ausgangszustand die Lamellenkanten 7 mehr oder minder geneigt zu einer Horizontalebene, so daß der Brettführungskanal 8 bereits im dargestellten Ausgangszustand einen vorgegebenen Drall aufweist. Mit anderen Worten, die Führungslemellen 6 jedes Lamellenpakets 4, 5 sind im Bereich ihrer Längskanten 7 in der Weise fächerartig gespreizt, daß der Brettführungskanal 8 dadurch seinen Drall erhält, wobei mit "Drall" ein mindestens angenähert um die Gestellängsachse 9 gewendelter Verlauf des Brettführungskanals 8 bezeichnet werden soll. Die fächerartige Spreizung der Führungslamellen 6 ist besonders deutlich in Fig. 4 erkennbar. Dort sind die beiden Lamellenpakete 4, 5 nach unten und oben auseinandergezogen dargestellt, so daß man die fächerartige Spreizung erkennt.

Die Führungslamellen 6 jedes Lamellenpakets 4 bzw. 5 sind jeweils um eine gemeinsame, sich nahe am Einlauf des Brettführungskanals 8 quer zu den Führungslamellen 6 erstreckende Lamellenschwenkachse 10 bzw. 11 jeweils gesondert schwenkbar. Hierdurch wird eine Verstellbarkeit des Dralls des Brettführungskanals 8 erreicht. Der Drall wird jeweils so groß gewählt, daß der nach der Herstellung der Bretter 1 vorhandene Drall vollständig beseitigt wird, so daß gerade Bretter erhalten werden. Dieser zunächst vorhandene Drall der Bretter 1 hängt von den Herstellungsbedingungen und den Eigenschaften des Holzes ab, insbesondere von der Feuchtigkeit und der Temperatur.

Die Verstellung der Führungslamellen 6 erfolgt durch einen Schwenkantrieb, wobei für jedes der beiden Lamellenpakete 4, 5, jeweils ein gesonderter Schwenkantrieb vorgesehen ist, der so ausgeführt ist, daß er eine unterschiedliche Schwenkung der einzelnen Führungslamellen ermöglicht.

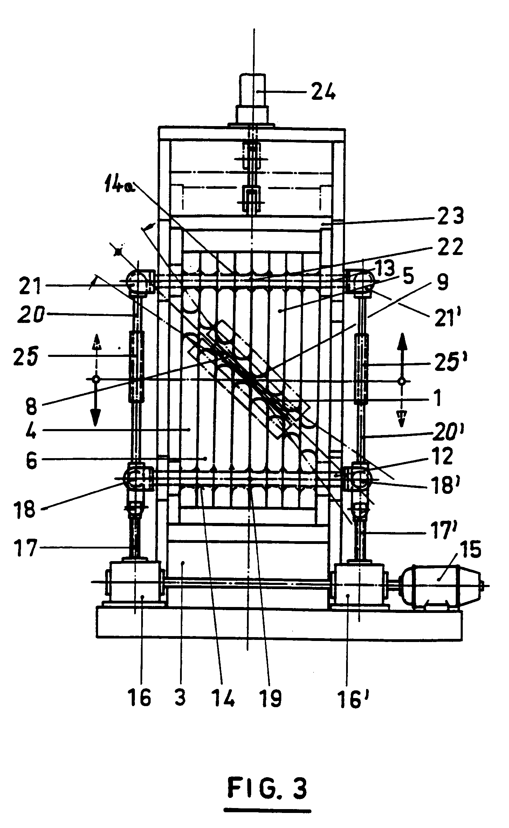

Bei dem dargestellten Ausführungsbeispiel weist dieser Schwenkantrieb für jedes Lamellenpaket 4, 5 einen Verstellstab 12, 13 auf, der sich jeweils durch Bohrungen 14 bzw. 14a quer zu den Führungslamellen 6 der Lamellenpakete 4, 5 erstreckt. Von einem gemeinsamen steuerbaren Verstellmotor 15 (Fig. 3) werden auf beiden Seiten des Gestells 3 angeordnete Winkelgetriebe 16,16' angetrieben, von denen sich jeweils eine Gewindespindel 17,17' nach oben erstreckt. Die beiden Gewindespindeln 17,17' greifen über jeweils ein Gelenk 18,18' an den beiden Enden des unteren Verstellstabs 12 an, die seitlich aus dem Gestell 3 herausragen. Bei einer Betätigung des Verstellmotors 15 werden die Gewindespindeln 17, 17' in der Weise gegenläufig angetrieben, daß das eine Gelenk 18' nach oben und das andere Gelenk 18 nach unten bewegt wird. Der Verstellstab 12 führt dabei eine Kippbewegung um eine sich parallel zur Gestellängsachse 9 erstreckende Kippachse 19 aus. Wie man aus Fig. 1 erkennt, sind die beiden Verstellstäbe 12, 13 nahe dem Auslaufende des Brettführungskanals 8 angeordnet.

Über senkrechte seitliche Schubstangen 20, 20' ist jedes Gelenk 18, 18' jeweils mit einem darüber liegenden Gelenk 21, 21' mit den beiden Enden des oberen Verstellstabes 13 gelenkig verbunden. Demzufolge wird bei der beschriebenen Verstellbewegung auch der obere Verstellstab 13 um eine sich parallel zur Gestellängsachse 9 erstreckende Kippachse 22 gekippt, wobei er parallel zu dem unteren Verstellstab 12 bleibt.

Durch diese Verstellbewegung ändert sich - wie in Fig. 3 angedeutet - die Schrägstellung des Brettführungskanals 8 am Auslaufende. Es versteht sich, daß der beim beschriebenen Ausführungsbeispiel durch die synchron gegenläufig antreibbaren Gewindespindeln 17 und die Schubstangen 20, 20' gebildete Kippantrieb auch in anderer Weise ausgeführt werden könnte, beispielsweise durch synchrongesteuerte Einzelantriebe, die an den Verstellstäben 12, 13 bzw. an den einzelnen Führungslamellen 6 angreifen.

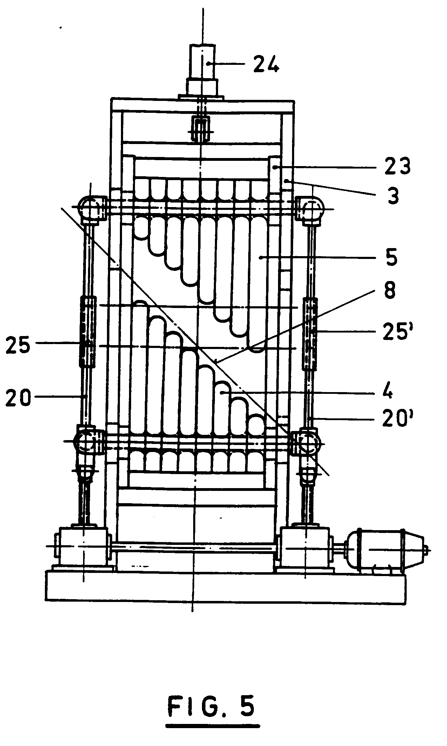

Während das untere Lamellenpaket 4 unmittelbar im Gestell 3 gelagert ist, ist das obere Lamellenpaket 5 in einem Tragrahmen 23 gelagert, der durch einen Öffnungsantrieb, beim dargestellten Ausführungsbeispiel durch einen Hubzylinder 24 anhebbar ist, um den Brettführungskanal 8 zu öffnen. Dieser geöffnete Zustand ist in Fig. 5 dargestellt. Das Öffnen des Brettführungskanals 8 ist erwünscht, um Holzreste beseitigen zu können, die sich bei einem Bruch der hindurchgeführten Bretter 1 im Brettführungskanal 8 ergeben können.

Um das Anheben des oberen Lamellenpakets 5 zu ermöglichen, sind die Schubstangen 20,20' in der Weise geteilt ausgeführt, daß sie jeweils ein Stangenschloß 25, 25' aufweisen, das geöffnet werden kann, um die Schubstangen 20, 20' teleskopartig zu verlängern, wenn das obere Lamellenpaket 5 in der beschriebenen Weise angehoben wird.

Wie in Fig. 1 angedeutet ist, befindet sich vor dem Auslaufende des Gestells 3 ein Rollenpaar 26 mit mindestens einer angetriebenen Rolle, die dazu dient, die Bretter 1 aus dem Gestell 3 herauszufördern. Das Zuführen der Bretter 1 kann entweder durch (nicht dargestellte) Zuführrollen oder durch die Vorschubbewegung beim Herstellen der Bretter erfolgen.

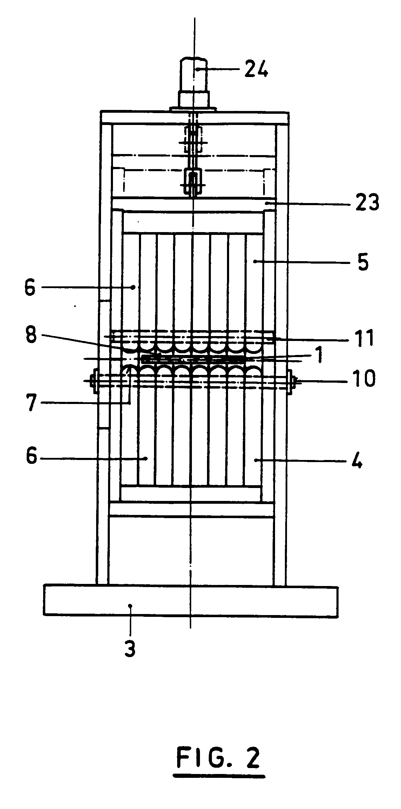

Bei dem dargestellten Ausführungsbeispiel weist der Brettführungskanal 8 bereits in der Grundstellung einen Drall auf, d.h. der am Einlauf (Fig. 2) horizontale Brettführungskanal 8 verläuft am Auslauf (Fig. 3) schräg. Stattdessen kann auch vorgesehen sein, daß der Brettführungskanal 8 in der Ausgangsstellung ohne Drall verläuft und durch Verstellung der Führungslamellen 6 entsprechend stark verstellt wird.

Der Verstellbereich der Führungslamellen 6 kann auch wesentlich größer gewählt werden als in Fig. 3 angedeutet. Für einen besonders großen Verstellbereich ist es zweckmäßig, für jede Führungslamelle einen gesonderten Schwenkantrieb vorzusehen.

## Patentansprüche

1. Vorrichtung zum Drehrichten von Brettern (1) und ähnlichen länglichen Holzerzeugnissen mit mehreren, in einem Gestell (3) verstellbar gelagerten Führungskörpern, die gemeinsam einen flachen Brettführungskanal (8) bilden, der sich entlang der Gestellängsachse erstreckt und einen durch Verstellen der Führungskörper veränderbaren Drall um die Gestellängsachse (9) aufweist, dadurch gekennzeichnet, daß die Führungskörper Führungslamellen (6) sind, die sich in Gestellängsrichtung erstrecken und in zwei Lamellenpaketen (4, 5) angeordnet sind, die zwischen sich mit ihren einander zugekehrten Lamellenkanten (7) den Brettführungskanal (8) bilden, und daß die Führungslamellen (6) jedes Lamellenpakets (4, 5) jeweils um eine gemeinsame, sich nahe am Einlauf des Brettführungskanals (8) quer zu den Führungslamellen (6) erstreckende Lamellenschwenkachse (10 bzw. 11) jeweils gesondert mittels eines Schwenkantriebs (12, 13, 15, 16, 16', 17, 17', 18, 18', 20, 20', 21, 21') schwenkbar sind.

2. Vorrichtung nach Anspruch 1, dadurch gekennzeichnet, daß alle Führungslamellen (6) jedes Lamellenpakets (4, 5) mit einem gemeinsamen Schwenkantrieb (12, 13, 15, 16, 16', 17, 17', 18, 18', 20, 20', 21, 21') derart verbunden sind, daß die einzelnen Führungslamellen (6) in der Weise unterschiedlich schwenkbar sind, daß sie fächerartig spreizbar sind.

3. Vorrichtung nach Anspruch 2, dadurch gekennzeichnet, daß der Schwenkantrieb sich durch Bohrungen (14, 14a) quer zu den Führungslamellen (6) der Lamellenpakete (4 bzw. 5) erstreckende Verstellstäbe (12 bzw. 13) aufweist, die um sich parallel zur Gestellängsache (9) erstreckende Achsen (19 bzw. 22) kippbar sind.

4. Vorrichtung nach Anspruch 3, dadurch gekennzeichnet, daß die Verstellstäbe (12, 13) an ihren beiden aus den Lamellenpaketen (4, 5) herausragenden Enden mit synchron und gegenläufig antreibbaren Kippantrieben (15, 16, 17, 17', 18, 18', 20, 20') verbunden sind.

5. Vorrichtung nach Anspruch 4, dadurch gekennzeichnet, daß die beiden Verstellstäbe (12, 13) der beiden Lamellenpakete (4, 5) an ihren Enden derart mit gemeinsamen Kippantrieben (15, 16, 17, 17', 18, 18', 20, 20') verbunden sind, daß die Verstellstäbe (12, 13) bei ihren Kippbewegungen parallel zueinander gehalten werden.

6. Vorrichtung nach Anspruch 4, dadurch gekennzeichnet, daß die Verstellstäbe (12, 13) nahe dem Auslaufende des Brettführungskanals (8) angeordnet sind.

7. Vorrichtung nach Anspruch 1, dadurch gekennzeichnet, daß jede Führungslamelle (6) mit einem gesonderten Schwenkantrieb versehen ist.

8. Vorrichtung nach Anspruch 1, dadurch gekennzeichnet, daß eines der beiden Lamellenpakete (5) in einem Tragrahmen (23) angeordnet ist, der durch einen Öffnungsantrieb (24) im Gestell (3) quer zur Gestellängsachse (9) verstellbar ist, um das Lamellenpaket (5) von dem anderen Lamellenpaket (4) abzuheben.

9. Vorrichtung nach Anspruch 1, dadurch gekennzeichnet, daß die dem Brettführungskanal (8) zugekehrten Lamellenkanten (7) der Führungslamellen (6) abgerundet sind.

## Claims

1. Device for the rotary truing of planks (1) and similar long timber products, having several guide elements adjustably supported in a frame (3), forming jointly a flat plank guide channel (8) which extends along the longitudinal axis of the frame and has a twist which can be varied around the longitudinal axis (9) of the frame by adjusting the guide elements, characterised in that the guide elements are guide plates (6) which extend in the longitudinal direction of the frame and are arranged in two sets (4, 5) which form the plank guide channel (8) between them by their plate edges (7) which face each other, and that the guide plates (6) of each set (4, 5) can each be swivelled around a common plate swivel axis (10 or 11) extending close to the entry of the plank guide channel (8) transversely to the guide plates (6), in each case separately by means of a pivot drive (12, 13, 15, 16, 16', 17, 17', 18, 18', 20, 20', 21, 21').

2. Device according to Claim 1, characterised in that all the guide plates (6) of each set (4, 5) are joined to a common pivot drive (12, 13, 15, 16, 16', 17, 17', 18, 18', 20, 20', 21, 21') in such a way that the individual guide plates (6) can be swivelled differently so that they can be spread out like a fan.

3. Device according to Claim 2, characterised in that the pivot drive has adjuster rods (12 or 13) which extend through holes (14, 14a) transversely to the guide plates (6) of the sets (4 or 5), which can be tilted about axes (19 or 22) extending parallel to the longitudinal axis (9) of the frame.

4. Device according to Claim 3, characterised in that the adjuster rods (12, 13) are joined at their two ends which project from the plate sets (4, 5) to tilt drives which can be driven synchronously and in different directions (15, 16, 17, 17', 18, 18', 20, 20').

5. Device according to Claim 4, characterised in that the two adjuster rods (12, 13) of the two sets of plates (4, 5) are joined at their ends to common tilt drives (15, 16, 17, 17', 18, 18', 20, 20') in such a way that the adjuster rods (12, 13) are kept parallel to each other during their tilting movements.

6. Device according to Claim 4, characterised in that the adjuster rods (12, 13) are located close to the exit end of the plank guide channel (8).

7. Device according to Claim 1, characterised in that each guide plate (6) is provided with a separate pivot drive.

8. Device according to Claim 1, characterised in that one of the two sets of plates (5) is located in a carrier frame (23) which can be adjusted by an opening drive (24) in the frame (3) transversely to the longitudinal axis (9) of the frame, in order to raise the set of plates (5) from the other set of plates (4).

9. Device according to Claim 1, characterised in that the plate edges (7) of the guide plates (6) which face the plank guide channel (8) are rounded off.

## Revendications

1. Procédé de dressage tournant de planches (1), et de pièces de bois analogues allongées, avec plusieurs corps de guidage montés mobiles dans un châssis (8), ces corps formant conjointement un canal guide-planches (3) plat qui s'étend le long de l'axe longitudinal du châssis et est soumis à un moment de rotation autour de l'axe longitudinal (9) du châssis modifiable par déplacement des corps de guidage, caractérisé en ce que les corps de guidage sont des lamelles de guidage (6) qui s'étendent dans la direction longitudinale du châssis et sont agencées en deux paquets de lamelles (4, 5), qui forment entre eux le canal guide-planches (8) par leurs bords (7) tournés l'un vers l'autre, et en ce que les lamelles de guidage (6) de chaque paquet (4, 5) peuvent pivoter respectivement autour d'un axe de pivotement commun (10 ou 11) s'étendant à proximité de l'entrée du canal guide-planches (8), transversalement aux lamelles de guidage (6), respectivement séparément via une commande de pivotement (12, 13, 15, 16, 16', 17, 17', 18, 18', 20, 20', 21, 21').

2. Dispositif selon la revendication 1, caractérisé en ce toutes les lamelles de guidage (6) de chaque paquet de lamelles (4, 5) sont reliées à une commande de pivotement commune (12, 13, 15, 16, 16', 17, 17', 18, 18', 20, 20', 21, 21') de manière que les lamelles de guidage individuelles (6) puissent pivoter différemment en sorte de pouvoir se déployer en éventail.

3. Dispositif selon la revendication 2, caractérisé en ce que la commande de pivotement présente des tiges de réglage (12 ou 13) s'étendant à travers des alésages (14, 14a) transversalement aux lamelles de guidage (6) des paquets de lamelles (4, 5), lesdites tiges pouvant basculer autour d'axes (19 ou 22) s'étendant parallèlement à l'axe longitudinal (9) du châssis.

4. Dispositif selon la revendication 3, caractérisé en ce que les tiges de réglage (12, 13) sont reliées à des commandes de basculement (15, 16, 17, 17', 18, 18', 20, 20') qui peuvent être commandées en synchronisme et à contre-phase, par leurs deux extrémités faisant saillie des paquets de lamelles (4, 5).

5. Dispositif selon la revendication 4, caractérisé en ce que les deux tiges de réglage (12, 13) des deux paquets de lamelles (4, 5) sont reliées, à leurs extrémités, à des commandes de basculement communes (15, 16, 17, 17', 18, 18', 20, 20') en sorte que les tiges de réglage (12, 13) soient maintenues parallèlement l'une à l'autre au cours de leurs mouvements de basculement.

6. Dispositif selon la revendication 4, caractérisé en ce que les tiges de réglage (12, 13) sont agencées à proximité de l'extrémité de sortie du canal guide-planches (8).

7. Dispositif selon la revendication 1, caractérisé en ce que chaque lamelle de guidage (6) est pourvue d'une commande de pivotement séparée.

8. Dispositif selon la revendication 1, caractérisé en ce que l'un des deux paquets de lamelles (5) est agencé dans un bâti de support (23) qui peut être déplacé par une commande d'ouverture (24) du châssis (3) transversalement à l'axe longitudinal (9) du châssis pour dégager le paquet de lamelles (5) de l'autre paquet de lamelles (4).

9. Dispositif selon la revendication 1, caractérisé en ce que les bords (7) des lamelles de guidage (6) tournés vers le canal guide-planches (8) sont arrondis.
